# FASCICULE DE BREVET EUROPEEN

(11) **EP 4 676 229 B1**
(45) Date de publication et mention de la délivrance du brevet: **02.12.2026**
(21) Numéro de dépôt: 24708216.7
(22) Date de dépôt: 04.03.2024
(51) Int. Cl.: A21C 11/00

(54) **PROCÉDÉ ET DISPOSITIF DE CONFORMAGE D'UNE PÂTE À PIZZA**
VERFAHREN UND VORRICHTUNG ZUM FORMEN VON PIZZATEIG
METHOD AND DEVICE FOR SHAPING PIZZA DOUGH

(30) Priorité: 06.03.2023 FR 2302046
(43) Date de publication de la demande: 14.01.2026
(73) Titulaire: Frenzza, 13200 Arles (FR)
(72) Inventeur: ALLARIA-BARDY, Bastien, 13200 Arles (FR); VIEN, Marc, 13200 Arles (FR)
(74) Mandataire: Roman, Alexis
(86) Numéro de dépôt international: PCT/EP2024/055641
(87) Numéro de publication internationale: WO 2024/184328

(56) Documents cités:
- EP-A2- 2 106 701
- KR-B1- 101 875 003
- US-B2- 6 711 991

## Description

### Domaine technique.

L'invention a pour objet un procédé de conformage automatique d'une pâte à pizza et un dispositif pour la mise en œuvre de ce procédé, c'est-à-dire un dispositif dont les éléments constitutifs permettent, par leurs actions et leurs coopérations, de conformer une pâte à pizza.

Cette invention est destinée à la fabrication automatique, sois sans aucune intervention humaine, d'une pizza, étant entendu qu'un pâton, ou boule de pâte à pizza, est préparé préalablement et que l'objet premier vise à conformer le pâton puis la pâte à pizza de sorte qu'elle présente une taille, une forme et une épaisseur correspondant au souhait d'un consommateur.

### Etat de la technique.

La fabrication artisanale de pizza atteint certaines limites dans son service aux consommateurs et on a vu ces dernières années se développer une offre de fabrication au moins en partie automatisée de pizzas, le choix étant toutefois souvent assez limité.

On connaît ainsi dans l'état de la technique le document WO 2017101015 qui divulgue un procédé de fabrication de pizzas dans lequel la conformation de la pâte à pizza, soit en particulier sa mise en forme en termes de taille et d'épaisseur, s'effectue en deux étapes, soit avec un mécanisme trop long et peu satisfaisant pour ce qui est de la qualité de conformation de la pâte. Dans ce document, il n'y a pas un rouleau unique pressant la pâte tandis que le plateau tourne suivant les instructions du système de contrôle qui gère l'action du rouleau et les mouvements du plateau suite aux informations transmises par des capteurs.

On connaît également le document EP 2134183 qui divulgue un appareil et un procédé de préparation et de cuisson de pizza à l'aide d'ingrédients frais, l'appareil se présentant sous la forme d'un distributeur automatique. Dans ce document, pour conformer la pâte à pizza, ce système de fabrication utilise une plaque de pressage avec une contre-plaque pour un pressage à chaud. Ce système n'est pas satisfaisant en termes de qualité de conformage de la pâte.

On connaît également dans l'état de la technique le document US 6711991 qui divulgue un système de fabrication automatique de pizzas dans lequel un rouleau d'aplatissement est supporté sur des guides horizontaux et roule alternativement dans des directions opposées le long des guides. Un plateau de réception est disposé horizontalement entre les guides, et est progressivement soulevé pour se rapprocher de la surface cylindrique du rouleau. Deux capteurs sont montés pour détecter deux positions d'extrémité d'un bras et pour fournir des signaux correspondantes à un système de contrôle. Ce système de contrôle réalise la rotation du plateau d'un quart d'angle. Un mécanisme de commande ramène le rouleau afin que ce dernier agisse sur la pâte pour l'aplatir suivant une premier direction, puis un nouveau quart de tour est réalisé et le rouleau à nouveau appliqué sur la pâte pour l'aplatir suivant une deuxième direction et ainsi de suite jusqu'à la détermination d'une forme ronde et d'une certaine épaisseur. Le plateau tourne d'un quart de tour autour d'un axe vertical à la fin de chaque course du galet le long des guides. Un pâton placé sur le plateau est ainsi progressivement aplati en une forme fine et ronde. Ce système est mécaniquement complexe et peu efficace en termes de qualité de conformage de la pâte.

On connaît en outre les documents KR 101875003, US 11178879, US 3390645A et CN 113273587 qui divulguent des système de fabrication automatique d'une pizza avec un conformage de la pâte peu satisfaisant et/ou peu fiable.

La demanderesse entend ainsi remédier aux lacunes des équipements actuels en proposant un conformage automatique de la pâte à pizza à la fois rapide et très efficace, c'est-à-dire que la taille, la forme et l'épaisseur de la pâte à pizza est obtenue de manière optimum au regard du souhait d'un consommateur, tout en garantissant une excellente pâte à pizza.

Grâce au dispositif selon l'invention, on peut désormais obtenir une pizza de son choix présentant une taille, une forme et une épaisseur correspondant exactement à son choix.

Un objectif de la présente invention est d'offrir une pizza de qualité en un temps minimum.

Un objectif majeur de la présente invention réside dans l'application d'un bon pétrissage et d'un bon étirage de la pâte à pizza, seuls à même à lui conférer d'excellentes qualités gustatives. Pour ce faire, la technique de pétrissage et d'étirage de la pâte à pizza doit être le plus proche possible de ce qui est exécuté par un pizzaïolo.

Un autre objectif de la présente invention réside en l'obtention d'une pizza répondant au choix précis, parmi un choix très grands de critères, de sa pizza, tant en termes des caractéristiques de la pâte que des ingrédients présents dessus.

Un autre objectif de la présente invention réside en la réalisation d'un process de conformage d'une pâte à pizza le plus proche possible des gestes d'un cuisinier spécialisé.

Un autre objectif de la présente invention réside en l'obtention d'un procédé de fabrication à la fois simple et efficace, de manière à ce que la fabrication de la pizza soit la plus économique possible, autrement dit que le coût pour le consommateur soit le plus faible possible.

Un autre objectif de la présente invention réside en l'obtention d'un process automatique de fabrication d'une pizza satisfaisants les hauts standards de qualité culinaire et gustative.

### Présentation de l'invention.

L'invention concerne ainsi un procédé de conformage automatique d'une pâte à pizza utilisant une détection du point de la pâte le plus proche du centre du plateau de réception puis de détermination de l'aire d'au moins deux triangles centrés sur ou autour de ce point pour un étalage optimum par un rouleau se plaçant dans la direction de ce point proximal ou à proximité.

Ainsi, l'invention se rapporte à un procédé de conformage automatique d'une pâte à pizza, comportant une étape de dépose d'un pâton sur un plateau de réception dont les données de dimensions, d'extrémités et du centre dudit plateau sont stockées dans un moyen de mémorisation numérique.

Le procédé selon l'invention se caractérise en ce qu'il comprend les étapes suivantes :
a) une première étape de détermination d'un point X₀ du contour extérieur de la pâte à pizza le plus éloigné des extrémités du plateau de réception,
b) à partir du point X₀, détermination de l'aire d'un triangle A₀ de la pâte à pizza dont un sommet dudit triangle A₀ est le centre du plateau de réception tandis que sa bissectrice passe par le point X₀, l'angle du triangle A₀ au centre du plateau étant compris entre 20° et 90°,
c) détermination de l'aire d'au moins un triangle A₁ ou A₂ contigu au triangle A₀, lesdits deux triangles A₁ ou A₂ étant susceptibles de recouvrir partiellement le triangle A₀, l'angle des triangles A₁ ou A₂ au centre du plateau étant égal à celui du triangle A₀,
d) détermination d'un point Y₀ comme le point opposé à X₀ sur le contour de la pâte à pizza puis détermination d'un triangle B₀ et B₁ ou B₂ respectivement opposés par rapport au sommet au triangle A₀ et A₁ ou A₂, la bissectrice de B₀ passant par le point Y₀, et avantageusement de même angle au centre du plateau que respectivement les triangle A₀ et B₁ ou B₂,
e) en fonction du rapport des aires de A₀ et A₁ ou A₂, une étape d'étalage, sous une pression plus ou moins forte, de la pâte à pizza à l'aide d'au moins un rouleau en appui sur la pâte se déplaçant suivant en direction de X₀ ou de la bissectrice des triangles A₁ ou A₂, puis
f) en fonction du rapport des aires de B₀ et B₁ ou B₂, une étape d'étalage, sous une pression plus ou moins forte, de la pâte à pizza à l'aide du rouleau en appui sur la pâte se déplaçant suivant en direction de Y₀ ou de la bissectrice des triangles B₁ ou B₂,
   - répétition des étapes a) à f) jusqu'à ce qu'à ce qu'il est déterminé que la pâte à pizza présente une aire totale au moins égale à une aire de seuil A_{SP}, le conformage de la pâte à pizza étant alors terminé.

Grâce à ces caractéristiques, le procédé de conformage automatique d'une pâte à pizza permet d'obtenir :
- un gain de temps unique pour conformer automatiquement le pâton puis la pâte à pizza,
- une qualité exceptionnelle en termes d'épaisseur, de taille (généralement circonférence de la pâte), et de goût grâce à l'étirage/pétrissage/étalage particulier de la pâte à pizza,
- un coût de préparation/conformage de la pâte à pizza très faible, d'où une pizza proposée au client à un prix particulièrement attractif.

On entend par l'expression « contour extérieur de la pâte à pizza le plus éloigné des extrémités du plateau de réception » la distance entre le point considéré sur le pourtour ou la circonférence de la pâte à pizza et le bord du plateau de réception. Cette distance se détermine en traçant une ligne partant du centre du plateau de réception jusqu'audit point considéré sur le pourtour/circonférence de la pâte, ladite distance correspondant au segment entre ledit point considéré et le bord d'intersection du plateau de réception. Dans la suite, ce bord de la pâte à pizza peut également être dénommé « trottoir » comme cela est d'usage dans certaines régions françaises.

On entend par le terme de « aire » en lien avec les triangles A₀, A₁, A₂, B₀, B₁ ou B₂ la surface de pâte à pizza d'un triangle ou quasi-triangle ayant pour sommet le centre du plateau de réception - correspondant avantageusement également en le centre de la pâte à pizza - et d'un angle audit sommet égal pour tous ces triangles, classiquement 60° ou 45°. Bien entendu, pour de tels triangles A₀, A₁, A₂, B₀, B₁ ou B₂, le côté du triangle opposé au somment formé par le centre du plateau de réception (ou centre de la pâte) consiste très rarement en un segment mais plutôt en une courbe plus ou moins régulière.

On entend par l'expression « Y₀ comme le point opposé à X₀ » le fait que Y₀ se trouve sur le pourtour ou la circonférence de la pâte à pizza à l'intersection de la droite passant par X₀ et le centre du plateau de réception (ou de la pâte à pizza).

On entend par le terme « étalage » l'action du passage du rouleau sur la pâte à pizza, le rouleau consistant en un rouleau à pâtisserie/cuisine classique, disposant d'un revêtement antiadhésif de sorte que la pâte à pizza n'adhère/accroche pas ledit rouleau, s'étendant suivant un axe linéaire. Le rouleau étale la pâte à pizza dans la direction d'un point, bissectrice de l'un des triangles A₀, A₁, A₂, B₀, B₁ ou B₂, de sorte que cette bissectrice s'étend toujours perpendiculairement au déplacement du rouleau ou de son axe linéaire.

Le procédé de conformage automatique selon l'invention réalise une comparaison des aires A₀ avec A₁ et/ou A₂ respectivement des aires B₀ avec B₁ et/ou B₂ pour réaliser un étalage de la pâte à pizza suivant l'une des bissectrices de ces triangles. Selon une première règle, l'étalage est effectué suivant la bissectrice du triangle présentant l'aire la plus petite entre les triangles A₀, A₁ et/ou A₂ et respectivement les triangles B₀, B₁ et/ou B₂. Plus précisément, le procédé de conformage compare le rapport des aires, lorsque trois triangles A₀, A₁, A₂ et B₀, B₁, B₂ sont utilisés pour déterminer la direction de déplacement du rouleau suivant l'une des bissectrices de ces triangles. Les exemples présentés dans la suite permettent d'appréhender comment ce rapport d'aire est apprécié pour effectuer l'étalage.

Ces opérations d'étalage de la pâte à pizza sont répétées jusqu'à ce qu'il soit déterminé qu'à tout le moins la pâte à pizza présente une aire globale au moins égale à une aire de seuil A_{SP}. A titre d'exemple, pour une pizza de 38 centimètres (cm) de diamètre, cette aire de seuil A_{SP} est fixée à 855 centimètre carré (cm²).

D'autres caractéristiques avantageuses de l'appareil objet de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :

Très avantageusement, la susdite étape de détermination c) comprend les triangles A₁ et A₂, les deux triangles A₁ et A₂ étant situés contigus et de part et d'autre du triangle A₀, la susdite étape d'étalage e) de la pâte à pizza est en outre fonction des aires des triangles A₀, A₁ et A₂.

Ainsi, il est optionnel mais particulièrement avantageux d'utiliser deux triangles A₁ et A₂ situés de part et d'autre de A₀, ces deux triangles et la mesure de leurs aires permettant d'optimiser l'étape d'étalage de la pâte à pizza.

Également, très avantageusement, la susdite étape de détermination d) comprend les triangles B₁ les B₂, avantageusement de deux triangles B₁ et B₂, la susdite étape d'étalage f) de la pâte à pizza est en outre fonction des aires des triangles B₀, B₁ et B₂.

Comme pour les triangles A₁ et A₂, il est optionnel mais particulièrement avantageux d'utiliser deux triangles B₁ et B₂ situés de part et d'autre de B₀.

De préférence, le conformage de la pâte à pizza n'est en outre terminé que lorsqu'il est déterminé qu'un premier plus grand segment de la pâte à pizza, reliant deux points opposés du contour de ladite pâte à pizza, est compris entre 75% et 125%, avantageusement comprise entre 90% et 110%, de la longueur d'un second segment perpendiculaire audit premier segment, reliant également deux points opposés du contour de la pâte à pizza.

De façon encore plus préférée, le premier plus grand segment de la pâte à pizza, reliant deux points opposés du contour de ladite pâte à pizza, est compris entre 95% et 105% de la longueur d'un second segment perpendiculaire audit premier segment, reliant également deux points opposés du contour de la pâte à pizza.

De façon préférée, une pluralité de points opposés sur le pourtour de la pâte à pizza sont considérés pour vérifier si cette deuxième condition d'arrêt du conformage est vérifiée. A titre d'exemple préféré, on considère au moins une paire de points opposés sur le pourtour de la pâte à pizza pour cette deuxième condition d'arrêt du conformage.

La mesure de l'aire globale de la pizza est réalisée régulièrement, avantageusement après chaque étape d'étalage.

Cette deuxième condition pour l'arrêt du conformage de la pâte à pizza est optionnelle mais très avantageuse. En effet, les pizzas se présentent classiquement sous la forme d'un disque et cette deuxième condition vise proposer une pizza parfaitement circulaire ou sous forme d'un disque.

Selon un mode d'exécution préféré de l'invention, l'étape d'étalage, sous une pression plus ou moins forte, de la pâte à pizza à l'aide du rouleau est réalisée en descendant ledit rouleau plus ou moins proche du plateau de réception.

Bien entendu, la distance du rouleau au plateau de réception est connue de sorte que cette distance est ajustée au regard de la quantité de pâte estimée sur la zone d'étalage, compte tenu du poids initial du pâton et de l'aire globale de la pâte à pizza, de manière à abaisser plus ou moins le rouleau contre le plateau de réception (mais sans contact).

Très avantageusement, le procédé de conformage automatique de la pâte à pizza comprend une étape préalable à la susdite étape a) d'écrasement et/ou d'étalement du pâton au cours de laquelle on fait coïncider le centre géométrique du pâton avec le centre du plateau de réception, avec une tolérance d'au plus 1 millimètres (mm) et avantageusement d'au plus 0,5 mm (les deux centres considérés étant distants d'au plus 1 mm, voire d'au plus 0,5 mm).

Cette étape préalable a essentiellement pour but un gain de temps par rapport à l'itération des étapes d'étalage e) et f) de sorte que le temps de conformage globale de la pâte à pizza est le plus réduit possible. A nouveau cette étape préalable est optionnelle mais particulièrement avantageuse.

Selon un mode d'exécution préféré de l'invention, les étapes d'étalage des aires A₀, avantageusement A₁ et/ou A₂, B₀, avantageusement B₁ et/ou B₂, de la pâte à pizza s'arrêtent en relevant le rouleau à une distance plus ou moins grande des extrémités du plateau de réception en fonction respectivement des points X₀ et Y₀.

Selon un mode d'exécution préféré de l'invention, le plateau de réception est déplacé en rotation de manière à amener le rouleau suivant une direction de déplacement pour la réalisation des susdites étapes d'étalage e) et f) de la pâte à pizza, avantageusement en outre au cours de l'étape préalable d'écrasement et/ou d'étalement du pâton.

Avantageusement, l'angle des triangles A₀, avantageusement A₁ et/ou A₂, B₀, avantageusement B₁ et/ou B₂, au centre du plateau est compris entre 40° et 70°, de préférence égal à 60°.

Selon un aspect particulièrement intéressant de l'invention, l'ensemble des étapes de conformage de la pâte à pizza, y compris éventuellement l'étape préalable d'écrasement et/ou d'étalement du pâton, s'effectue en au plus 120 secondes, avantageusement en au plus 90 secondes.

La présente invention se rapporte également à un dispositif de conformage automatique d'une pâte à pizza, caractérisé en ce qu'il comprend :
- un plateau de réception pour le support du pâton puis de la pâte à pizza, avantageusement monté mobile en rotation grâce à au moins un moyen d'actionnement,
- au moins une caméra numérique, avantageusement située au-dessus du plateau de réception,
- au moins un rouleau monté mobile, grâce à au moins un moyen d'actionnement, en hauteur et suivant au moins une direction de déplacement par rapport au plateau de réception,
- un moyen d'analyse et de traitement comportant un moyen de mémorisation numérique dans lequel sont stockés les données de dimensions, d'extrémités et du centre dudit plateau,

le moyen d'analyse et de traitement étant relié au susdit plateau, à la susdite caméra et au rouleau pour la commande de ces derniers et de leurs moyens d'actionnement, l'analyse et le traitement des données provenant de la caméra numérique ainsi que le stockage desdites données dans les moyens de mémorisation,
la coopération du plateau de réception, de la caméra numérique, du rouleau et du moyen d'analyse et de traitement met en œuvre des étapes du procédé de conformage automatique d'une pâte à pizza tel que décrit succinctement ci-dessus.

Avantageusement, le dispositif pour la mise en œuvre du procédé de conformage automatique d'une pâte à pizza selon l'invention comprend également un moyen de distribution du pâton sur le plateau de réception, avantageusement ledit moyen de distribution comporte un moyen d'écrasement du pâton.

De préférence, le dispositif pour la mise en œuvre du procédé de conformage automatique d'une pâte à pizza selon l'invention comprend en outre des moyens d'éclairage du plateau de réception.

Très avantageusement, le susdit rouleau comprend un système mécanique anti-soulèvement interdisant le soulèvement de la pâte à pizza du plateau de réception pendant et après le passage du rouleau lors des étapes d'étalement de la pâte à pizza.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1] est un schéma bloc présentant les différentes étapes du procédé de conformage d'une pâte à pizza selon l'invention incluant également l'étape préalable d'écrasement et de centrage du pâton ou de la pâte à pizza.
[Fig. 2] est une vue schématique d'une pâte à pizza sur un plateau de réception, les triangles A₀, A₁, A₂, B₀, B₁, B₂ y étant représentés.
[Fig. 3] est une vue schématique d'un pâton ou pâte à pizza présent sur un plateau de réception au cours de l'étape préalable d'écrasement du pâton ou de la pâte.
[Fig. 4] est une représentation schématique des différents éléments constituant le dispositif pour conformer une pâte à pizza selon l'invention.
[Fig. 5] est une vue partielle en coupe transversale illustrant le système mécanique d'anti-soulèvement interdisant le soulèvement de la pâte à pizza du plateau de réception pendant et après le passage du rouleau lors des étapes d'étalement de la pâte à pizza.

### Description des modes de réalisation.

Le pâton est la boule de pâte à pizza 1 qui est obtenue par pétrissage. Cette boule est mise en attente pour être pesée, tournée, ou façonnée avant d'être utilisée. Une fois transformé, le pâton représente la quantité utile à la fabrication de la pâte à pizza 1. Autrement dit, le terme « pâton » est utilisé pour désigner la pâte à pizza 1 déposée sur le plateau de réception 10, éventuellement écrasée lors de l'étape préalable d'écrasement et de centrage, étant entendu que ce pâton peut également être désigné par l'expression de « pâte à pizza » 1 dès l'instant où une opération mécanique, telle qu'un écrasement, lui est appliqué.

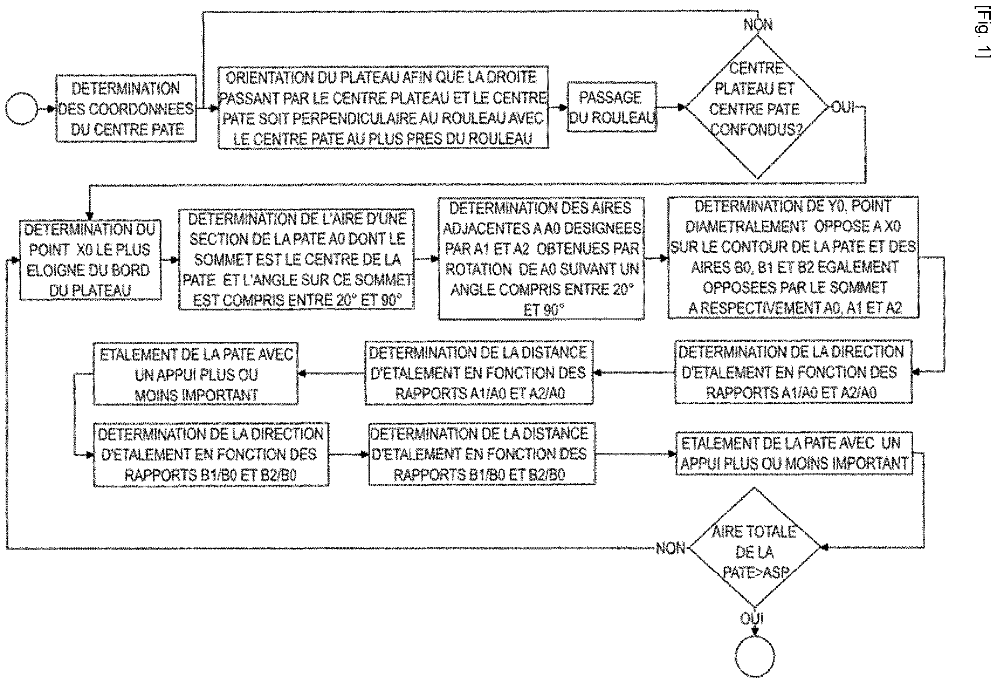

La figure 1 illustre le procédé de conformage de la pâte à pizza 1 selon ses différentes étapes.

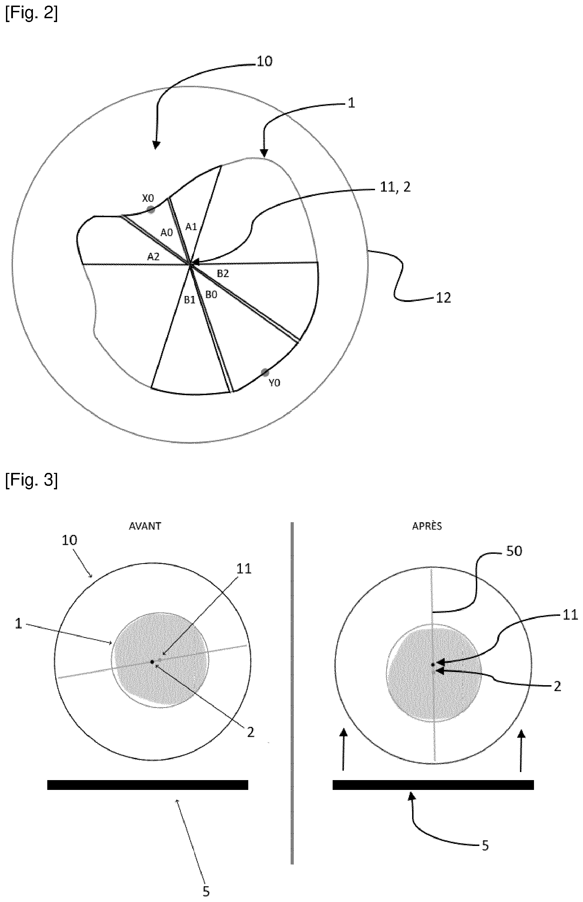

Il faut noter ici que les étapes réalisées jusqu'à la détermination d'un point X₀ le plus éloigné des bords 12 du plateau de réception 10 sont facultatives bien que très avantageuses, en particulier en termes de temps nécessaire pour la conformation de la pâte à pizza 1. Ainsi, grâce à une caméra 30 numérique avantageusement située au-dessus du plateau de réception 10, les moyens d'analyse et de commande (unité centrale ou analogue), non représentés sur les figures annexées, détermine le centre géométrique 2 du pâton qui vient d'être déposé sur le plateau de réception 10. Il faut noter ici que le pâton est amené par un moyen mécanique ou électromécanique, tel qu'un bras robotisé, une structure de support libérant le pâton une fois ce dernier au-dessus du plateau 10 ou encore une main humaine. Il s'ensuit une ou plusieurs étapes itératives destinées à faire coïncider le centre 2 du pâton (à deux dimensions) avec le centre 11 du plateau 10 de réception. La figure 3 illustre un instant « avant » et un instant « après » au cours desquels les moyens d'analyse et de commande déterminent dans quelle direction 50 et éventuellement sur quelle portion de la pâte à pizza 1 le rouleau 5 doit s'appliquer. Ainsi, sur cette figure 3, les moyens d'analyse et de commande orientent le plateau de réception 10, mobile en rotation, de manière à ce que le centre géométrique 2 de la pâte 1 et celui du centre 11 du plateau de réception 10 définisse la direction d'étalage 50 pour le rouleau 5 ; le centre 2 de la pâte 1 étant situé avant celui du plateau 10 (par rapport au rouleau 5) de sorte que lors de l'avancée du rouleau 5 le centre 2 de la pâte 1 se rapproche du centre 11 du plateau 10. Evidemment, le centre 11 du plateau de réception 10 est invariant, prédéfini et préenregistré dans les moyens de mémorisation (mémoire de l'unité centrale), non représentés sur les figures annexées. Au cours de cette opération préalable, la pâte à pizza 1 est d'une part étalée ou écrasée sur le plateau de réception 10 et surtout on fait coïncider le centre géométrique 2 de la pâte à pizza 1 avec celui du plateau 10, l'application du rouleau 5 selon les séquences visibles sur la figure 3 est poursuivie jusqu'à ce que cet objectif d'identité des centres 2 de la pâte 1 et du plateau de réception 10 est atteint, autrement dit que la caméra 30 capte une image déterminée par les moyens d'analyse et de commande comme une coïncidence de ces deux centres 2 et 11.

On note ici que le centre géométrique 2 de la pâte à pizza 1 s'entend comme le centre du cercle de plus petit diamètre/rayon dans lequel s'inscrit ou s'inclue la pâte à pizza 1, comme cela est illustré sur la figure 3 pour les instants « avant » et « après ». On peut noter également qu'il est défini avantageusement qu'il y a coïncidence du centre 11 du plateau de réception 10 et du centre géométrique 2 de la pâte à pizza 1 lorsque ces deux centres 2, 11 sont éloignés d'au plus un (1) millimètre (mm), voire d'au plus 0,5 mm. Bien entendu, ce choix de tolérance concernant la coïncidence des deux centres 2, 11 est déterminé selon le souhait du fabricant et peut donc être réduit ou augmenté par rapport aux valeurs données précédemment.

Une fois cette étape préalable optionnelle réalisée, les étapes selon le procédé de conformage automatique de la pâte à pizza 1 commencent. Il n'est pas utile de décrire plus avant ces étapes qui sont explicitées et visibles sur la figure 1.

La figure 2 illustre le découpage numérique réalisé grâce à la caméra 30 numérique par les moyens d'analyse et de commande. Dans cet exemple choisi pour illustrer l'invention, trois triangles A₀, A₁ et A₂ sont déterminés à partir du point X₀ déterminé comme le plus éloigné des bords 12 du plateau de réception 10. On peut noter ici que ces trois triangles présentent le même angle au sommet (environ 40°). Ce sommet des triangles est toujours constitué par le centre 11 du plateau 10 coïncidant avantageusement avec le centre 2 de la pâte à pizza 1 à l'issue de la susdite étape préalable. Comme trois triangles A₀, A₁ et A₂ sont utilisés ici, on détermine trois autres triangles identiques et opposés respectivement à chacun de ces triangles par rapport au centre 11 du plateau de réception 10, à savoir les triangles B₀, B₁ et B₂. On peut noter ici que les triangles ne présentent entre eux aucun chevauchement mais selon un autre mode d'exécution préférentiel on choisit de déterminer les triangles A₁ et/ou A₂ avec un chevauchement partiel par rapport au triangle A₀. Il est entendu que le terme de « chevauchement partiel » signifie ici qu'une portion de l'aire du triangle A₀ est compris dans l'aire du triangle A₁ et/ou A₂, ou autrement dit qu'il existe un angle de chevauchement commun aux triangles A₀ et A₁ ou A₂. Bien entendu, si un chevauchement existe au niveau des triangles A₁ et/ou A₂ avec le triangle A₀, un chevauchement d'angle équivalent existe au niveau des triangles B₁ et/ou B₂ avec le triangle B₀. Avantageusement, l'angle de chevauchement est identique entre les triangles A₀ et A₁ d'une part et A₀ et A₂ d'autre part lorsqu'on utilise les trois triangles A₀, A₁ et A₂. Une règle importante du procédé de conformage selon l'invention réside dans le fait que, dans l'hypothèse où trois triangles sont déterminés, les triangles A₁ et A₂ sont situés de part et d'autre du triangle A₀, comme illustré sur la figure 2.

Comme indiqué précédemment, le procédé de conformage selon l'invention utilise deux triangles A₀ et A₁ ou A₂ et avantageusement les trois triangles A₀, A₁ et A₂.

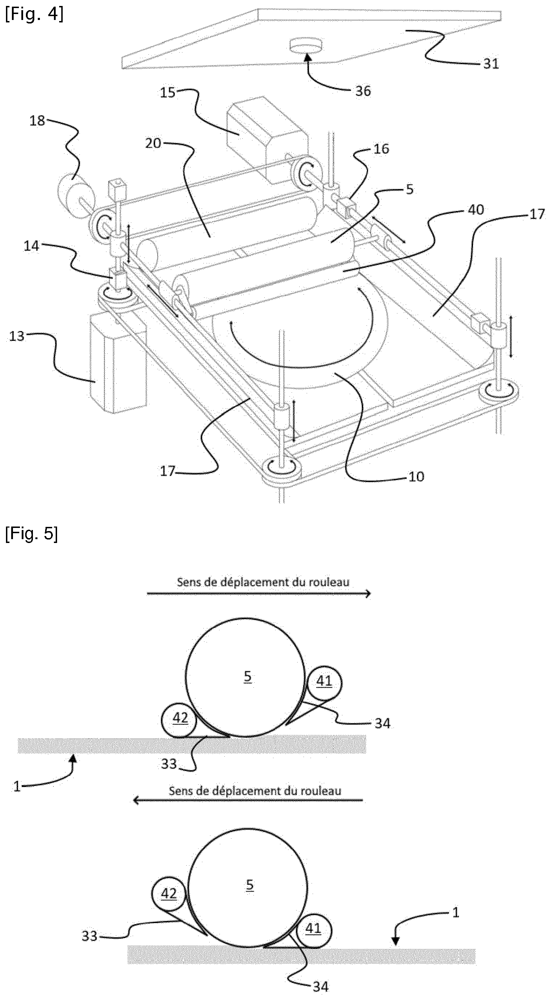

La figure 4 illustre un mode de réalisation du dispositif pour le conformage automatique d'une pâte à pizza 1, autrement dit pour la mise en œuvre du procédé selon l'invention.

Dans cet exemple choisi pour illustrer l'invention, ce dispositif comprend au moins un moteur vertical 13 pour assurer le déplacement vertical du rouleau 5 destiné à étaler la pâte à pizza 1. Ce moteur 13 est couplé à un capteur vertical 14 apte à détecter et surveiller la hauteur du rouleau 5 et communiquer ces informations aux moyens d'analyse et de commande dirigeant le moteur vertical 13. Ce dispositif comprend également un moteur avant/arrière 15 couplé à un capteur avant/arrière 16 pour déterminer la position horizontale du rouleau 5 par rapport au plateau de réception 10 et la modifier si besoin sous la commande des moyens d'analyse et de commande. Une roue codeuse 18 est également envisagée pour connaitre la position du rouleau 5. Outre le rouleau 5 d'étalement utilisé pour les étapes d'étalage de la pâte à pizza 1, on peut éventuellement doter le dispositif d'un rouleau d'entrée 20 destiné à aplatir le pâton lorsque ce dernier est amené par translation horizontale jusqu'au plateau de réception 10 - le plateau 10 peut également être translaté avec le pâton 1 jusqu'à la station de conformage de la pâte à pizza 1 - et passe ainsi préalablement par ce rouleau d'entrée 20. Ce rouleau d'entrée 20 consiste en un élément mécanique - et non électromécanique - et n'est pas commandé par les moyens d'analyse et de commande et sert uniquement à aplanir le pâton qui se présente classiquement initialement sous la forme d'une boule ou demi-sphère.

On peut noter également dans ce dispositif un système anti-débordement 17, situé sur le côté du plateau de réception 10 ici en vis-à-vis de part et d'autre de ce dernier 10, ayant pour fonction d'éviter tout débordement de la pâte à pizza 1. Ce système anti-débordement 17 consiste ici en un moyen mécanique passif se présentant sous la forme d'une pièce d'angle disposant d'une surface susceptible d'être en contact avec la pâte 1 et formant un arc de cercle orienté pour constituer un bord s'élevant sur deux côtés opposés du plateau de réception 10. Bien entendu, ce système anti-débordement 17 peut simplement consister en deux parois en vis-à-vis délimitant un espace dans lequel le plateau de réception 10 est contraint, ces parois s'étendant perpendiculairement au plan horizontal du plateau 10.

Une caméra 30 numérique est située au-dessus du plateau de réception 10 et un éclairage 31, par exemple de type « flat dome » entoure ladite caméra 30 de manière à ce que cette dernière 30 capte bien tous les pixels formant l'image de la pâte à pizza 1.

Enfin, un système anti-soulèvement 40 de la pâte à pizza 1 est prévu autour du rouleau 5. Ce système anti-soulèvement 40 est montré de manière plus détaillée sur la figure 5. Ce système comprend deux contre-rouleaux 41, 42 chacun fixé sur le même support ou structure que le rouleau 5, deux courroies 43, 44 situées de part et d'autre du rouleau 5 pour assurer la liaison entre ce dernier 30 et les deux contre-rouleaux 41, 42 ainsi que deux freins magnétiques, non représentés sur les figures annexées, permettant de retenir les courroies 43, 44 dans le sens opposé au déplacement du rouleau 5 dans le but d'incliner ce dernier, comme illustré sur cette figure 5.

Tous les éléments électromécaniques susmentionnés du dispositif de conformage automatique de la pâte à pizza 1 sont commandés par les moyens d'analyse et de commande, à savoir en particulier les moteurs 13, 15 et les capteurs 14, 16, la roue codeuse 18 et les moyens de rotation du plateau de réception 10, la caméra 30.

Afin que le procédé de conformage automatique selon l'invention soit bien appréhendé, trois exemples illustrant les étapes principales du procédé de conformage selon l'invention sont présentés ci-après.

### Exemple 1 :

Dans cet exemple, l'aire totale de la pâte à pizza 1 avant les étapes d'étalement e) et f) est égale à 435,73 cm². Le point X₀ le plus éloigné des bords 12 du plateau de réception 10 est situé avec un angle Θ = - 126° (par rapport à une référence d'angle 0°) ou également 227,164 de coordonnées en pixels. Ainsi, le point Y₀, opposé à X₀, est situé avec un angle Θ = 54° ou également 421,307 de coordonnées en pixels. L'angle au sommet des triangles A₀, A₁, A₂, B₀, B₁, B₂ est égal à 60° avec un chevauchement de 15° entre les triangles A₀ et A₁/A₂ tout comme entre les triangles B₀ et B₁/B₂. L'aire du triangle A₀ est déterminée comme égal à 6632 pixels tandis que l'aire du triangle B₀ est déterminé comme égal à 8310 pixels.

Les mesures et actions suivantes sont déterminées puis commandées par les moyens d'analyses :

| A₁/A₀ | A₂/A₀ | B₁/B₀ | B₂/B₀ | décision étalement aller (étape e) | décision étalement retour (étape f) | aire pâte après étalements (étapes e et f) |
|---|---|---|---|---|---|---|
| 1,11 | 1,11 | 1,06 | 0,97 | étalement de A₀ en relevant le rouleau avant le bord de la pâte | étalement de B₂ en relevant le rouleau avant le bord de la pâte | 475,82 cm² |

A titre de compréhension, un étalement suivant par exemple le triangle A₀ signifie un déplacement du rouleau 5 perpendiculairement à la direction défini par la bissectrice du triangle A₀, soit en l'espèce perpendiculairement à la droite définie par le centre 11 du plateau de réception 10 au point X₀. On note ici que les rapports A₁/A₀ et A₂/A₀ sont égaux, dans ce cas, il est choisi avantageusement un étalage de la pâte à pizza suivant la bissectrice de A₀.

### Exemple 2 :

Dans cet exemple, l'aire totale de la pâte à pizza 1 avant les étapes d'étalement e) et f) est égale à 836,32 cm². Le point X₀ le plus éloigné des bords 12 du plateau de réception 10 est situé avec un angle Θ = - 64° (par rapport à une référence d'angle 0°) ou également 179,296 de coordonnées en pixels. Ainsi, le point Y₀, opposé à X₀, est situé avec un angle Θ = 116° ou également 458,159 de coordonnées en pixels. L'angle au sommet des triangles A₀, A₁, A₂, B₀, B₁, B₂ est égal à 60° avec un chevauchement de 15° entre les triangles A₀ et A₁/A₂ tout comme entre les triangles B₀ et B₁/B₂. L'aire du triangle A₀ est déterminée comme égal à 12554,5 pixels tandis que l'aire du triangle B₀ est déterminé comme égal à 13163,5 pixels.

Les mesures et actions suivantes sont déterminées puis commandées par les moyens d'analyses :

| A₁/A₀ | A₂/A₀ | B₁/B₀ | B₂/B₀ | décision étalement aller (étape e) | décision étalement retour (étape f) | aire pâte après étalements (étapes e et f) |
|---|---|---|---|---|---|---|
| 1,22 | 1,28 | 1,19 | 1,14 | étalement de A₂ en relevant le rouleau avant le bord de la pâte | étalement de B₁ en relevant le rouleau avant le bord de la pâte | 960,53 cm² |

### Exemple 3 :

Dans cet exemple, l'aire totale de la pâte à pizza 1 avant les étapes d'étalement e) et f) est égale à 377,53 cm². Le point X₀ le plus éloigné des bords 12 du plateau de réception 10 est situé avec un angle Θ = - 88° (par rapport à une référence d'angle 0°) ou également 221,234 de coordonnées en pixels. Ainsi, le point Y₀, opposé à X₀, est situé avec un angle Θ = 92° ou également 418,228 de coordonnées en pixels. L'angle au sommet des triangles A₀, A₁, A₂, B₀, B₁, B₂ est égal à 60° avec un chevauchement de 15° entre les triangles A₀ et A₁/A₂ tout comme entre les triangles B₀ et B₁/B₂. L'aire du triangle A₀ est déterminée comme égal à 4900 pixels tandis que l'aire du triangle B₀ est déterminé comme égal à 5527,5 pixels.

Les mesures et actions suivantes sont déterminées puis commandées par les moyens d'analyses :

| A₁/A₀ | A₂/A₀ | B₁/B₀ | B₂/B₀ | décision étalement aller (étape e) | décision étalement retour (étape f) | aire pâte après étalements (étapes e et f) |
|---|---|---|---|---|---|---|
| 1,24 | 1,36 | 1,24 | 1,21 | étalement de A₁, le rouleau ne se relève pas | étalement de B₂, le rouleau ne se relève pas | 461,63 cm² |

Les moyens d'analyse et de commande déterminent l'arrêt de l'étalage aller ou retour en fonction de l'aire du triangle suivant la bissectrice duquel est réalisé le déplacement du rouleau 5. Ainsi, il existe différents seuils d'aire de triangle de pâte à pizza 1 en fonction desquels le rouleau 5 est remonté plus ou moins proche du bord 12 du plateau de réception 10. A titre d'exemple, si l'aire du triangle considéré pour réaliser l'étalement de la pâte à pizza 1 est déterminé comme inférieur à un premier seuil d'aire, alors le rouleau 5 termine sa course jusqu'aux bords 12 du plateau de réception 10 tandis que si l'aire de ce même triangle est déterminée entre deux seuils d'aire, le rouleau 5 est relevé - sa course d'étalage s'arrêtant - à mi-parcours, autrement à une certaine distance des bords 12 du plateau de réception 10. Bien entendu, les valeurs de seuil sont fonction de la taille et de l'épaisseur de la pizza souhaité par le consommateur, au regard du poids/volume du pâton ou de la pâte à pizza 1 initiale.

L'agencement des différents éléments et/ou moyens et/ou étapes de l'invention, dans les modes de réalisation décrits ci-dessus, ne doit pas être compris comme exigeant un tel agencement dans toutes les implémentations. En tout état de cause, on comprendra que diverses modifications peuvent être apportées à ces éléments et/ou moyens et/ou étapes, sans s'écarter de l'esprit et de la portée de l'invention. En particulier :
- la forme et les dimensions du plateau de réception 10 ou du rouleau 5 ;
- la forme, les dimensions, l'agencement des différents éléments constituant le dispositif de conformage automatique d'une pâte à pizza 1 selon l'invention ainsi que leurs interactions ;
- la forme et l'épaisseur de la pâte à pizza 1, étant considéré ici qu'il a été choisi ici d'illustrer l'invention avec une pizza circulaire, mais que cette dernière pourrait également être de forme carré ou rectangulaire.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de conformage automatique d'une pâte à pizza (1), comportant une étape de dépose d'un pâton sur un plateau de réception (10) dont les données de dimensions, d'extrémités et du centre (11) dudit plateau (10) sont stockées dans un moyen de mémorisation numérique,
le pâton consistant en la pâte à pizza (1) sous une forme préalable d'une boule plus ou moins aplatie,
**caractérisé en ce qu'**il comprend les étapes suivantes :
a) une première étape de détermination d'un point X₀ du contour extérieur de la pâte à pizza (1) le plus éloigné des extrémités du plateau de réception (10),
b) à partir du point X₀, détermination de l'aire d'un triangle A₀ de la pâte à pizza (1) dont un sommet dudit triangle A₀ est le centre (11) du plateau de réception (10) tandis que sa bissectrice passe par le point X₀, l'angle du triangle A₀ au centre (11) du plateau (10) étant compris entre 20° et 90°,
c) détermination de l'aire d'au moins un triangle A₁ ou A₂ contigu au triangle A₀, lesdits deux triangles A₁ ou A₂ étant susceptibles de recouvrir partiellement le triangle A₀, l'angle des triangles A₁ ou A₂ au centre (11) du plateau (10) étant égal à celui du triangle A₀,
d) détermination d'un point Y₀ comme le point opposé à X₀ sur le contour de la pâte à pizza (1) puis détermination d'un triangle B₀ et B₁ ou B₂ respectivement opposés par rapport au sommet au triangle A₀ et A₁ ou A₂, la bissectrice de B₀ passant par le point Y₀, et avantageusement de même angle au centre (11) du plateau (10) que respectivement les triangle A₀ et B₁ ou B₂,
e) en fonction du rapport des aires de A₀ et A₁ ou A₂, une étape d'étalage, sous une pression plus ou moins forte, de la pâte à pizza (1) à l'aide d'au moins un rouleau (5) en appui sur la pâte (1) se déplaçant suivant en direction de X₀ ou de la bissectrice des triangles A₁ ou A₂, puis
f) en fonction du rapport des aires de B₀ et B₁ ou B₂, une étape d'étalage, sous une pression plus ou moins forte, de la pâte à pizza (1) à l'aide du rouleau (5) en appui sur la pâte (1) se déplaçant suivant en direction de Y₀ ou de la bissectrice des triangles B₁ ou B₂,
- répétition des étapes a) à f) jusqu'à ce qu'à ce qu'il est déterminé que la pâte à pizza (1) présente une aire totale au moins égale à une aire de seuil A_{SP}, le conformage de la pâte à pizza (1) étant alors terminé.

2. Procédé selon la revendication 1, dans lequel la susdite étape de détermination c) comprend les triangles A₁ et A₂, les deux triangles A₁ et A₂ étant situés contigus et de part et d'autre du triangle A₀, la susdite étape d'étalage e) de la pâte à pizza (1) est en outre fonction des aires des triangles A₀, A₁ et A₂.

3. Procédé selon la revendication 2, dans lequel la susdite étape de détermination d) comprend les triangles B₁ les B₂, avantageusement de deux triangles B₁ et B₂, la susdite étape d'étalage f) de la pâte à pizza (1) est en outre fonction des aires des triangles B₀, B₁ et B₂.

4. Procédé selon l'une quelconque des revendications 1 à 3, dans lequel le conformage de la pâte à pizza (1) n'est en outre terminé que lorsqu'il est déterminé qu'un premier plus grand segment de la pâte à pizza (1), reliant deux points opposés du contour de ladite pâte à pizza (1), est compris entre 75% et 125%, avantageusement comprise entre 90% et 110%, de la longueur d'un second segment perpendiculaire audit premier segment, reliant également deux points opposés du contour de la pâte à pizza (1).

5. Procédé selon l'une quelconque des revendications précédentes, comprenant une étape préalable à la susdite étape a) d'écrasement et/ou d'étalement du pâton au cours de laquelle on fait coïncider le centre géométrique du pâton avec le centre (11) du plateau de réception (10), avec une tolérance d'au plus 1 centimètres (cm) et avantageusement d'au plus 0,5 cm.

6. Procédé selon l'une quelconque des revendications précédentes, dans lequel le plateau de réception (10) est déplacé en rotation de manière à amener le rouleau (5) suivant une direction de déplacement pour la réalisation des susdites étapes d'étalage e) et f) de la pâte à pizza (1), avantageusement en outre au cours de l'étape préalable d'écrasement et/ou d'étalement du pâton.

7. Procédé selon l'une quelconque des revendications précédentes, dans lequel l'angle des triangles A₀, avantageusement A₁ et/ou A₂, B₀, avantageusement B₁ et/ou B₂, au centre (11) du plateau (10) est compris entre 40° et 70°, de préférence égal à 60°.

8. omprend :
- un plateau de réception (10) pour le support du pâton puis de la pâte à pizza (1), avantageusement monté mobile en rotation grâce à au moins un moyen d'actionnement,
- au moins une caméra (30) numérique, avantageusement située au-dessus du plateau de réception (10),
- au moins un rouleau (5) monté mobile, grâce à au moins un moyen d'actionnement, en hauteur et suivant au moins une direction de déplacement par rapport au plateau de réception (10),
- un moyen d'analyse et de traitement comportant un moyen de mémorisation numérique dans lequel sont stockés les données de dimensions, d'extrémités et du centre (11) dudit plateau (10),
le moyen d'analyse et de traitement étant relié au susdit plateau (10), à la susdite caméra (30) et au rouleau (5) pour la commande de ces derniers et de leurs moyens d'actionnement, l'analyse et le traitement des données provenant de la caméra (30) numérique ainsi que le stockage desdites données dans les moyens de mémorisation,
la coopération du plateau de réception (10), de la caméra (30) numérique, du rouleau (5) et du moyen d'analyse et de traitement met en œuvre des étapes du procédé de conformage automatique d'une pâte à pizza (1) selon l'une quelconque des revendications précédentes.

9. Dispositif selon la revendication 8, comprenant en outre des moyens d'éclairage (31) du plateau de réception (10).

10. Dispositif selon l'une des revendications 8 ou 9, dans lequel le rouleau (5) comprend un système mécanique anti-soulèvement (40) interdisant le soulèvement de la pâte à pizza (1) du plateau de réception (10) pendant et après le passage du rouleau (5) lors des étapes d'étalement de la pâte à pizza (1).

## Patentansprüche

1. Verfahren zum automatischen Formen eines Pizzateigs (1), das einen Schritt des Ablegens eines Teiglings auf einem Aufnahmeteller (10) aufweist, dessen Daten der Abmessungen, der Enden und der Mitte (11) des Tellers (10) in einem digitalen Speichermedium gespeichert sind, wobei der Teigling aus dem Pizzateig (1) in einer vorläufigen Form einer mehr oder weniger abgeflachten Kugel besteht,
**dadurch gekennzeichnet, dass** es die folgenden Schritte umfasst:
a) einen ersten Schritt des Bestimmens eines Punktes X₀ der Außenkontur des Pizzateigs (1), der von den Enden des Aufnahmetellers (10) am weitesten entfernt ist,
b) ausgehend von dem Punkt X₀ Bestimmen der Fläche eines Dreiecks A₀ des Pizzateigs (1), wobei ein Scheitelpunkt des Dreiecks A₀ die Mitte (11) des Aufnahmetellers (10) ist, während seine Winkelhalbierende durch den Punkt X₀ verläuft, wobei der Winkel des Dreiecks A₀ in der Mitte (11) des Tellers (10) zwischen 20° und 90° liegt,
c) Bestimmen der Fläche mindestens eines Dreiecks A₁ oder A₂, das an das Dreieck A₀ angrenzt, wobei die beiden Dreiecke A₁ oder A₂ das Dreieck A₀ teilweise abdecken können, wobei der Winkel der Dreiecke A₁ oder A₂ in der Mitte (11) des Tellers (10) gleich dem des Dreiecks A₀ ist,
d) Bestimmen eines Punktes Y₀ als Gegenpunkt zu X₀ auf der Kontur des Pizzateigs (1) und anschließend Bestimmen eines Dreiecks B₀ und B₁ oder B₂, die jeweils dem Scheitelpunkt des Dreiecks A₀ und A₁ oder A₂ gegenüberliegen, wobei die Winkelhalbierende von B₀ durch den Punkt Y₀ verläuft und vorzugsweise denselben Winkel in der Mitte (11) des Teillers (10) aufweist wie jeweils die Dreiecke A₀ und B₁ oder B₂,
e) je nach dem Verhältnis der Flächen von A₀ und A₁ oder A₂ einen Schritt des Ausbreitens des Pizzateigs (1) unter mehr oder weniger starkem Druck mithilfe mindestens einer Rolle (5), die auf dem Teig (1) aufliegt und sich in Richtung X₀ oder entlang der Winkelhalbierenden der Dreiecke A₁ oder A₂ bewegt, dann
f) je nach dem Verhältnis der Flächen von B₀ und B₁ oder B₂ einen Schritt des Ausbreitens des Pizzateigs (1) unter mehr oder weniger starkem Druck mithilfe der Rolle (5), die auf dem Teig (1) aufliegt und sich in Richtung Y₀ oder entlang der Winkelhalbierenden der Dreiecke B₁ oder B₂ bewegt,
- Wiederholen der Schritte a) bis f), bis bestimmt wird, dass der Pizzateig (1) eine Gesamtfläche aufweist, die mindestens einer Schwellenfläche Aₛₚ entspricht, wobei dann das Formen des Pizzateigs (1) abgeschlossen ist.

2. Verfahren nach Anspruch 1, wobei der vorgenannte Bestimmungsschritt c) die Dreiecke A₁ und A₂ umfasst, wobei sich die beiden Dreiecke A₁ und A₂ angrenzend an und auf beiden Seiten des Dreiecks A₀ befinden, wobei der vorgenannte Schritt des Ausbreitens e) des Pizzateigs (1) ferner von den Flächen der Dreiecke A₀, A₁ und A₂ abhängt.

3. Verfahren nach Anspruch 2, wobei der vorgenannte Bestimmungsschritt d) die Dreiecke B₁ und B₂ umfasst, vorzugsweise zwei Dreiecke B₁ und B₂, wobei der vorgenannte Schritt des Ausbreitens f) des Pizzateigs (1) ferner von den Bereichen der Dreiecke B₀, B1 und B2 abhängt.

4. Verfahren nach einem der Ansprüche 1 bis 3, wobei das Formen des Pizzateigs (1) ferner erst abgeschlossen ist, wenn bestimmt wird, dass ein erstes größeres Segment des Pizzateigs (1), das zwei gegenüberliegende Punkte der Kontur des Pizzateigs (1) verbindet, zwischen 75 % und 125 %, vorzugsweise zwischen 90 % und 110 %, der Länge eines zweiten Segments liegt, das senkrecht zu dem ersten Segment verläuft und auch zwei gegenüberliegende Punkte der Kontur des Pizzateigs (1) verbindet.

5. Verfahren nach einem der vorhergehenden Ansprüche, umfassend vor dem vorgenannten Schritt a) einen Schritt des Flachdrückens und/oder Ausrollens des Teiglings, bei dem die geometrische Mitte des Teiglings mit der Mitte (11) des Aufnahmetellers (10) mit einer Toleranz von höchstens 1 Zentimeter (cm) und vorzugsweise von höchstens 0,5 cm übereinstimmt.

6. Verfahren nach einem der vorhergehenden Ansprüche, wobei der Aufnahmeteller (10) in Drehung versetzt wird, um die Rolle (5) in einer Bewegungsrichtung zur Durchführung der vorgenannten Schritte e) und f) des Ausbreitens des Pizzateigs (1) zu führen, vorzugsweise zudem während des vorherigen Schritts des Flachdrückens und/oder Ausrollens des Teigs.

7. Verfahren nach einem der vorhergehenden Ansprüche, wobei der Winkel der Dreiecke A₀, vorzugsweise A₁ und/oder A₂, B₀, vorzugsweise B₁ und/oder B₂, in der Mitte (11) des Tellers (10) zwischen 40° und 70° liegt und vorzugsweise gleich 60° beträgt.

8. Vorrichtung zum automatischen Formen eines Pizzateigs (1), **dadurch gekennzeichnet, dass** sie umfasst:
- einen Aufnahmteller (10) zum Tragen des Teiglings und dann des Pizzateigs (1), der vorzugsweise durch mindestens ein Betätigungsmittel drehbar montiert ist,
- mindestens eine digitale Kamera (30), die sich vorzugsweise oberhalb des Aufnahmetellers (10) befindet,
- mindestens eine Rolle (5), die mittels mindestens eines Betätigungsmittels in der Höhe und in mindestens einer Bewegungsrichtung in Bezug auf den Aufnahmeteller (10) beweglich montiert ist,
- ein Analyse- und Verarbeitungsmittel, das ein digitales Speichermittel aufweist, in dem die Daten der Abmessungen, der Enden und der Mitte (11) des Tellers (10) gespeichert sind,
wobei das Analyse- und Verarbeitungsmittel mit dem vorgenannten Teller (10), der vorgenannten Kamera (30) und der Rolle (5) zur Steuerung dieser und ihrer Betätigungsmittel, zur Analyse und Verarbeitung der von der digitalen Kamera (30) stammenden Daten sowie zur Speicherung dieser Daten in den Speichermitteln verbunden ist,
wobei das Zusammenwirken des Aufnahmetellers (10), der digitalen Kamera (30), der Rolle (5) und des Analyse- und Verarbeitungsmittels die Schritte des Verfahrens zum automatischen Formen eines Pizzateigs (1) nach einem der vorhergehenden Ansprüche umsetzt.

9. Vorrichtung nach Anspruch 8, ferner umfassend Beleuchtungsmittel (31) für den Aufnahmeteller (10).

10. Vorrichtung nach einem der Ansprüche 8 oder 9, wobei die Rolle (5) ein mechanisches Anti-Abhebesystem (40) umfasst, das das Abheben des Pizzateigs (1) von dem Aufnahmeteller (10) während und nach dem Durchlaufen der Rolle (5) während der Schritte des Ausrollens des Pizzateigs (1) verhindert.

## Claims

1. A method for automatically shaping pizza dough (1), including a step of depositing a dough piece onto a receiving tray (10), the data on dimensions, ends and the centre (11) of said tray (10) being stored in a digital storage means, the dough piece consisting of the pizza dough (1) in a preliminary form of a more or less flattened ball,
**characterised in that it** comprises the following steps:
a) a first step of determining a point X₀ of the outer contour of the pizza dough (1) furthest from the ends of the receiving tray (10),
b) from the point X₀, determining the area of a triangle A₀ of the pizza dough (1) an apex of said triangle A₀ of which is the centre (11) of the receiving tray (10) while its bisector passes through the point X₀, the angle of the triangle A₀ at the centre (11) of the tray (10) being between 20° and 90°,
c) determining the area of at least one triangle A₁ or A₂ adjacent to the triangle A₀, said two triangles A₁ or A₂ being likely to partially cover the triangle A₀, the angle of the triangles A₁ or A₂ at the centre (11) of the plate (10) being equal to that of the triangle A₀,
d) determining a point Y₀ as the point opposite to X₀ on the contour of the pizza dough (1), then determining a triangle B₀ and B₁ or B₂ being respectively opposite with respect to the apex of the triangle A₀ and A₁ or A₂, the bisector of B₀ passing through the point Y₀, and advantageously having the same angle at the centre (11) of the tray (10) as the triangles A₀ and B₁ or B₂ respectively,
e) depending on the ratio of the areas of A₀ and A₁ or A₂, a step of spreading, under more or less strong pressure, the pizza dough (1) using at least one roller (5) bearing on the dough (1) moving along the direction of X₀ or the bisector of the triangles A₁ or A₂, then
f) depending on the ratio of the areas of B₀ and B₁ or B₂, a step of spreading, under more or less strong pressure, the pizza dough (1) using the roller (5) bearing on the dough (1) moving along the direction of Y₀ or the bisector of the triangles B₁ or B₂,
- repeating steps a) to f) until it is determined that the pizza dough (1) has a total area at least equal to a threshold area Aₛₚ, the shaping of the pizza dough (1) being then completed.

2. The method according to claim 1, wherein the aforementioned determination step c) comprises the triangles A₁ and A₂, the two triangles A₁ and A₂ being located adjacent to and on either side of the triangle A₀, the aforementioned step of spreading e) the pizza dough (1) is furthermore dependent on the areas of the triangles A₀, A₁ and A₂.

3. The method according to claim 2, wherein the aforementioned determination step d) comprises the triangles B₁ and B₂, advantageously two triangles B₁ and B₂, the aforementioned step of spreading f) the pizza dough (1) is furthermore dependent on the areas of the triangles B₀, B1 and B2.

4. The method according to any of claims 1 to 3, wherein the shaping of the pizza dough (1) is further completed only when it is determined that a first larger segment of the pizza dough (1), connecting two opposite points of the contour of said pizza dough (1), is between 75% and 125%, advantageously between 90% and 110%, of the length of a second segment perpendicular to said first segment, also connecting two opposite points of the contour of the pizza dough (1).

5. The method according to any one of the preceding claims, comprising a step prior to the aforementioned step a) of flattening and/or spreading the dough piece, during which the geometric centre of the dough piece is aligned with the centre (11) of the receiving tray (10), with a tolerance of no more than 1 centimetre (cm) and, advantageously, no more than 0.5 cm.

6. The method according to any one of the preceding claims, wherein the receiving tray (10) is rotated so as to move the roller (5) in a direction of movement for carrying out the aforementioned steps e) and f) of spreading the pizza dough (1), further advantageously, during the prior step of flattening and/or spreading the dough piece.

7. The method according to any one of the preceding claims, wherein the angle of the triangles A₀, advantageously A₁ and/or A₂, B₀, advantageously B₁ and/or B₂, at the centre (11) of the tray (10) is between 40° and 70°, preferably equal to 60°.

8. A device for automatically shaping pizza dough (1),
**characterised in that** it comprises:
- a receiving tray (10) for supporting the dough piece then the pizza dough (1), advantageously mounted to be rotatable by means of at least one actuating means,
- at least one digital camera (30), advantageously located above the receiving tray (10),
- at least one roller (5) mounted to be movable, by means of at least one actuating means, in height and in at least one direction of movement with respect to the receiving tray (10),
- an analysis and processing means including a digital storage means in which the data on dimensions, ends and the centre (11) of said tray (10) are stored,
the analysis and processing means being connected to the aforementioned tray (10), the aforementioned camera (30) and the roller (5) for controlling the latter and their actuating means, the analysis and processing of data from the digital camera (30) as well as the storage of said data in the storage means,
the cooperation of the receiving tray (10), the digital camera (30), the roller (5) and the analysis and processing means carries out the steps of the method for automatically shaping a pizza dough (1) according to any one of the preceding claims.

9. The device according to claim 8, further comprising means (31) for illuminating the receiving tray (10).

10. The device according to one of claims 8 or 9, wherein the roller (5) comprises a mechanical anti-lifting system (40) prohibiting the pizza dough (1) from being lifted from the receiving tray (10) during and after the passage of the roller (5) during the steps of spreading the pizza dough (1).
